# EUROPÄISCHE PATENTANMELDUNG

(11) **EP 1 083 647 A2**
(43) Veröffentlichungstag der Anmeldung: **14.03.2001**
(21) Anmeldenummer: 00810729.4
(22) Anmeldetag: 16.08.2000
(51) Int. Cl.: H02K 5/04

(54) **Horizontalachsige elektrische Maschine**

(30) Priorität: 27.08.1999 DE 19940630
(71) Anmelder: ABB (Schweiz) AG, 5401 Baden (CH)
(72) Erfinder: Guerra, Gianfranco, 5242 Birr (CH); Hediger, Daniel, 5504 Othmarsingen (CH); Rieder, Martin, 5200 Brugg (CH)

(57) **Zusammenfassung**

Eine horizontalachsige elektrische Maschine (10) umfasst ein mit Gehäusespanten (24,..,27, 30) versteiftes, in eine Gehäuseunterteil (15) und ein abnehmbares Gehäuseoberteil (16) unterteiltes Gehäuse (14, 15, 16), sowie einen Statorblechkörper (11), welcher in senkrecht zur Maschinenlängsachse (36) angeordneten, gegenseitig beabstandeten Tragringen (13, 13', 13") verspannt ist, wobei die Tragringe (13, 13', 13") an mehreren Stellen ihres Aussenumfangs über Befestigungsteile (18, 19, 20, 21) mit dem Gehäuseunterteil (15) federnd verbunden sind.

Bei einer solchen Maschine (10) wird eine den späteren Betrieb nicht behindernde Transportsicherung dadurch erreicht, dass zwischen dem Statorblechkörper (11) bzw. den Tragringen (13, 13', 13") und Gehäuseunterteil (15) fest eingestellte Sicherungsmittel (31,..,35) angeordnet sind, welche beim Transport der Maschine (10) die axiale Relativbewegung zwischen dem Statorblechkörper (11) bzw. den Tragringen (13, 13', 13") und Gehäuseunterteil (15) begrenzen, und während des Betriebs eine freie Ausdehnung des wärmeren Statorblechkörpers (11) gegenüber dem kälteren Gehäuse (14, 15, 16) gewährleisten.

## Beschreibung

### TECHNISCHES GEBIET

Die vorliegende Erfindung bezieht sich auf das Gebiet der elektrischen Maschinen. Sie betrifft eine horizontalachsige elektrische Maschine gemäss dem Oberbegriff des Anspruchs 1.

Eine solche Maschine ist z.B. aus der EP-A2-0 633 643 der Anmelderin bekannt.

### STAND DER TECHNIK

Bei gasgekühlten elektrischen Maschinen wie z.B. Turbogeneratoren treten insbesondere in höheren Leistungsbereichen aufgrund der betriebsbedingten Erwärmung grosse axiale und radiale Ausdehnungen im Statorblechkörper auf, die möglichst gleichmässig auf das den Statorblechkörper umgebende Gehäuse übertragen werden müssen. In der US-A-4,663,553 ist dazu bereits vorgeschlagen worden, den Statorblechkörper in einer Mehrzahl von senkrecht zur Maschinenlängsachse stehenden, untereinander beabstandeten Tragringen zu verkeilen, die auf gegenüberliegenden Seiten über vertikale Befestigungsplatten und horizontale Rohrstücke mit dem Gehäuseunterteil fest verschweisst sind. Diese Art der Befestigung erlaubt eine einfache Montage sowie eine leichte Zugänglichkeit der zu verschweissenden Konstruktionsteile und gewährleistet darüber hinaus eine gute Qualität der Schweissnähte.

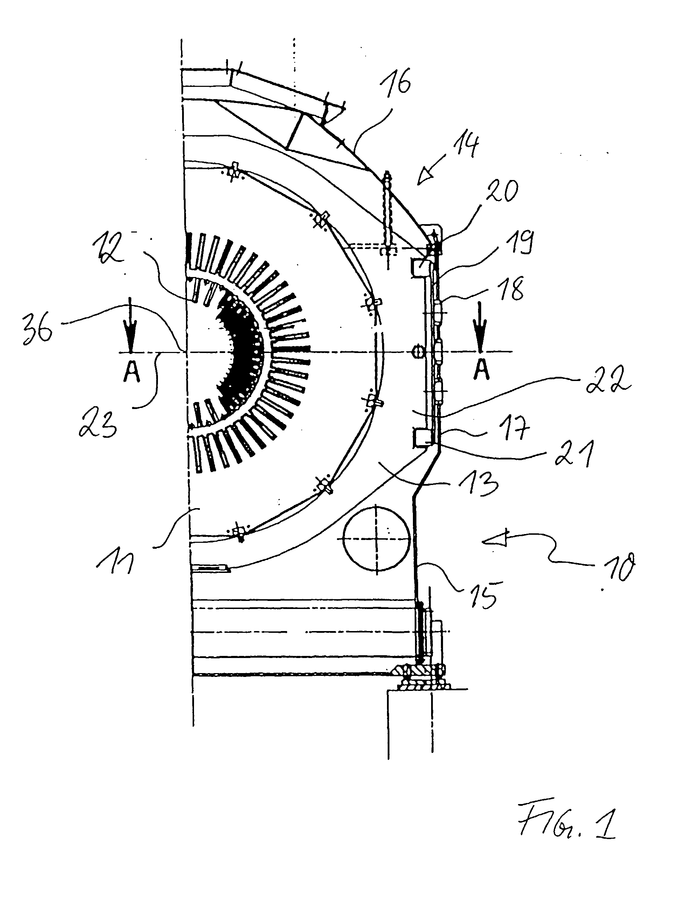

Es hat sich jedoch herausgestellt, dass bei grossen Maschinen eine schwingungsmässige Entkopplung zwischen dem Statorblechkörper und dem Gehäuse wünschenswert wäre, damit die Schallemissionen verringert und übermässige mechanische Belastungen der Verbindungsstellen zwischen Statorblechkörper und Gehäuseunterteil sicher vermieden werden. Eine solche Entkopplung wird gemäss der eingangs zitierten EP-A2-0 633 643 auf einfache und wirtschaftliche Weise dadurch erreicht, dass die zwischen den Tragringen und dem Gehäuseunterteil angeordneten Befestigungsplatten so mit den Tragringen und dem Gehäuseunterteil verbunden werden, dass sie als Blattfedern wirken. Eine derartige federnde Aufhängung des Statorblechkörpers im Gehäuse ist in der Fig. 1 wiedergegeben. Fig. 1 zeigt in einem vereinfachten halbseitigen Querschnitt eine horizontalachsige elektrische Maschine 10, die konzentrisch zu einer Maschinenlängsachse 36 einen Rotor 12 und einen den Rotor 12 umgebenden Statorblechkörper 11 umfasst. Rotor 12 und Statorblechkörper 11 sind in einem Gehäuse 14 untergebracht, das entlang einer horizontalen Mittelebene 23 in ein Gehäuseunterteil 15 und ein Gehäuseoberteil 16 unterteilt ist. Das Gehäuseoberteil 16 kann zu Montage- und/oder Wartungszwecken vom Gehäuseunterteil 15 abgenommen werden.

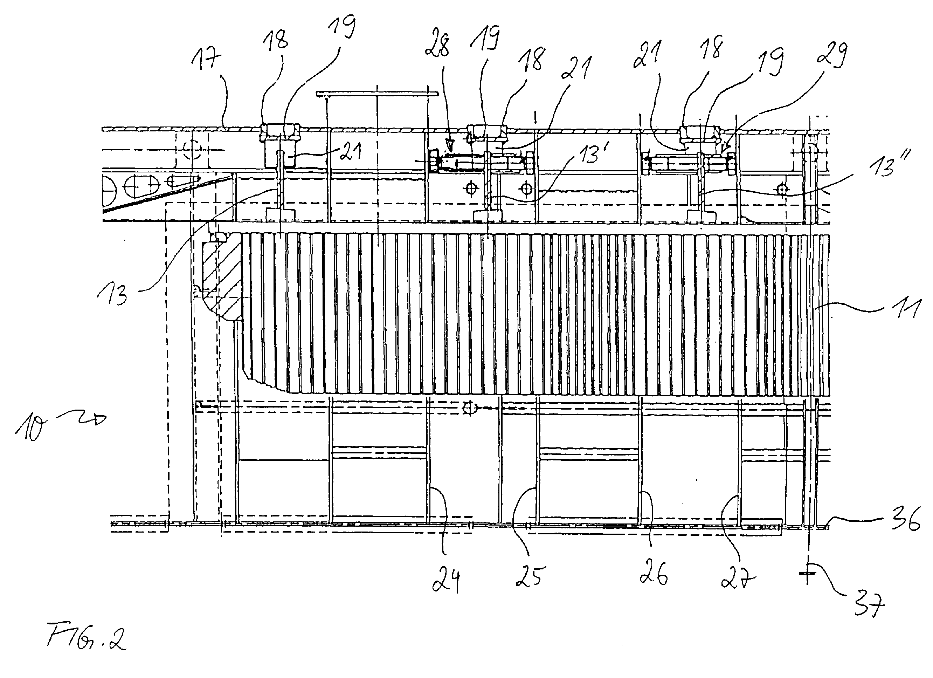

Der Statorblechkörper 11 ist - wie dies in der US-A-4,663,553 oder in der EP-A2-0 633 643 bereits beschrieben worden ist - in einer Mehrzahl von in der Maschinenlängsachse 36 hintereinander angeordneten Tragringen 13 (13, 13', 13" in Fig. 2) verkeilt befestigt. Die Tragringe 13 weisen seitlich auf gegenüberliegenden Seiten herausstehende Erweiterungen 22 auf, an denen sie mit dem Gehäuseunterteil 15 federnd verbunden sind. Dazu sind am oberen und unteren Ende jeder Erweiterung 22 jeweils seitlich vorstehend Befestigungsblöcke 20, 21 angeschweisst, an denen ihrerseits aussen mit den Enden eine als Blattfeder wirkende Befestigungsplatte 19 angeschweisst ist. Die Befestigungsplatte 19 ist in ihrem Mittelbereich über mehrere übereinander angeordnete Rohrstücke 18 mit einem vertikalen, ebenen Gehäuseabschnitt 17 des Gehäuseunterteils 15 verschweisst. In Fig. 2 ist diese Art der Befestigung im Längsschnitt entlang der Ebene A-A aus Fig. 1 dargestellt.

Da der Statorblechkörper 11 gegenüber dem Gehäuse 14 eine vergleichsweise grosse Masse aufweist, können beim Transport der Maschine 10 von ihrem Herstellungs- zum Einsatzort erhebliche Beschleunigungskräfte zwischen Statorblechkörper 11 und Gehäuse 14 auftreten, welche die federnde Befestigung und insbesondere die dort angebrachten Schweissnähte mechanisch stark beanspruchen. Um derartige Belastungen während des Transportes zu vermeiden oder zumindest auf ein unschädliches Mass herabzusetzen, setzt man - wie in Fig. 2 gezeigt - sogenannte Transport-Arretierverschraubungen (TAVs) 28, 29 ein. Diese TAVs sind im wesentlichen einstellbare Stützelemente, die während des Transports die Tragringe 13', 13" gegen benachbarte Gehäusespanten 24, 25 bzw. 26, 27 des Gehäuseunterteils 15 abstützen. Dazu werden parallel zur Maschinenhauptachse 36 auf beiden Seiten des Tragringes Gewindehülsen angeschweisst, in welche am freien Ende entsprechende Schrauben eingeschraubt sind. Beim Einsetzen des Statorblechkörpers 11 in das Gehäuseunterteil 15 während der werksseitigen Vormontage werden die Schrauben zunächst in die Gewindehülsen hinreichend weit hineingedreht, um nicht im Wege zu sein. Sind die Tragringe 13, 13' und 13" mit dem Gehäuseunterteil 15 verschweisst, werden die Schrauben der TAVs 28, 29 soweit herausgedreht, bis sie mit der Oberseite des Schraubenkopfes an dem benachbarten Gehäusespant anstossen, wie dies in Fig. 2 dargestellt ist. Der Statorblechkörper 11 ist dann im Gehäuseunterteil 15 fest eingespannt. Bei einer axialen Beschleunigung des Statorblechkörpers 11 relativ zum Gehäuse 14 während des Transports können so die auftretenden Beschleunigungskräfte sicher in die Gehäusespanten 24,..,27 eingeleitet werden, ohne die federnde Aufhängung zu belasten.

Nachteilig ist hierbei jedoch, dass die TAVs nach dem Aufstellen und vor der Inbetriebnahme der Maschine 10 wieder gelöst bzw. gelockert werden müssen, so dass eine Spiel von z.B. 20 mm zwischen den Schrauben und den Gehäusespanten 24,..,27 entsteht, damit sich der Statorblechkörper 11 bei der betriebsbedingten Erwärmung relativ zum Gehäuse frei ausdehnen kann. Dies spielt dann keine Rolle, wenn die Maschine ohne Gehäuseoberteil 16 mit einem speziellen Transportdeckel zum Aufstellungsort spediert wird, weil das Lösen der TAVs vor dem Montieren des Gehäuseoberteils 16 ohne grossen Zusatzaufwand möglich ist. Wird dagegen die Maschine 10 im vollständigen Gehäuse 14 ohne Transportdeckel spediert, muss am Einsatzort in der Anlage zunächst das Gehäuseoberteil 16 demontiert werden, um die TAVs zu lösen. Danach erfolgt die Remontage des Gehäuseoberteils. Diese Vorgehensweise ist kosten- und zeitintensiv.

### DARSTELLUNG DER ERFINDUNG

Es ist daher Aufgabe der Erfindung, eine Maschine der eingangs genannten Art zu schaffen, bei der hinsichtlich der Beschleunigungskräfte und deren Auswirkungen auf die federnde Lagerung des Statorblechkörpers ein sicherer Transport gewährleistet ist, ohne dass am Aufstellungsort irgendwelche Transportsicherungen gelöst werden müssen.

Die Aufgabe wird durch die Gesamtheit der Merkmale des Anspruchs 1 gelöst. Der Kern der Erfindung besteht darin, durch geeignete Mittel die Relativbewegung zwischen dem Statorblechkörper und dem Gehäuseunterteil so zu begrenzen, dass einerseits beim Transport übermässige Bewegungen bzw. Beschleunigungskräfte aufgefangen werden und andererseits die betriebsbedingten Wärmeausdehnungen des Statorblechkörpers nicht behindert werden.

Eine erste bevorzugte Ausführungsform der Maschine nach der Erfindung ist dadurch gekennzeichnet, dass die Gehäusespanten parallel zu den Tragringen verlaufen, dass die Sicherungsmittel jeweils zwischen einem Tragring und einem benachbarten Gehäusespant angeordnet sind, und dass die Sicherungsmittel als Abstandshalter ausgebildet sind, welche sich zwischen dem jeweiligen Tragring und dem benachbarten Gehäusespant erstrecken, und welche mit dem einen Ende fest mit dem Tragring oder dem benachbarten Gehäusespant verbunden sind, und zwischen dem anderen Ende und dem benachbarten Gehäusespant bzw. dem Tragring ein Spiel aufweisen. Durch ein geeignet gewähltes Spiel kann die Bewegung während des Transportes wirksam begrenzt werden, ohne die Wärmeausdehnung während des späteren Betriebs zu behindern.

Besonders einfach ist es, wenn die Abstandshalter in ihrer Länge einstellbar ausgebildet sind, weil dann die Abstandshalter bei ihrer Montage flexibel an die verschiedenen Anwendungsfälle angepasst werden können. Bevorzugt umfassen die Abstandshalter jeweils eine Gewindehülse und eine in die Gewindehülse eingedrehte Schraube.

Die zu den äusseren Enden des Statorblechkörpers hin zunehmende Wärmeausdehnung während des Betriebes kann dadurch berücksichtigt werden, dass - wenn sich der Statorblechkörper auf beiden Seiten einer senkrecht zur Maschinenlängsachse orientierten vertikalen Mittelebene erstreckt - bei den von der vertikalen Mittelebene weiter entfernten Tragringen die Abstandshalter jeweils nur zwischen den Tragring und dem näher zur vertikalen Mittelebene liegenden benachbarten Gehäusespant angeordnet sind, während bei den näher an der vertikalen Mittelebene liegenden Tragringen die Abstandshalter jeweils zwischen den Tragring und den beiden benachbarten Gehäusespanten angeordnet sind.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im vereinfachten Querschnitt halbseitigen Querschnitt eine horizontalachsige elektrische Maschine mit federnder Befestigung des Statorblechkörpers im Gehäuse, wie sie für die Realisierung der Erfindung in Betracht kommt;
- Fig. 2: im vereinfachten Längsschnitt in der Ebene A-A aus Fig. 1 die Maschine gemäss Fig. 1 mit einer bis anhin eingesetzten Transport-Arretierverschraubung; und
- Fig. 3: eine zu Fig. 2 vergleichbare Darstellung mit Transportsicherungsmitteln gemäss einem bevorzugten Ausführungsbeispiel der Erfindung.

### WEGE ZUR AUSFÜHRUNG DER ERFINDUNG

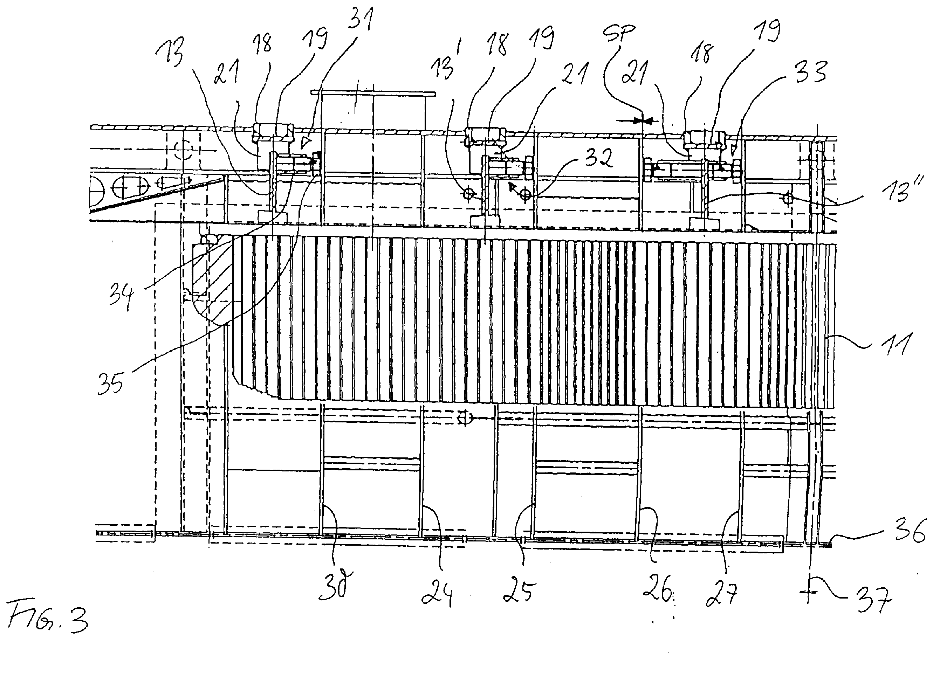

Die Erfindung, wie sie beispielhaft in Fig. 3 dargestellt ist, verwendet nun anstelle der bisherigen Transport-Arretierverschraubungen, die für den Transport angezogen und hinterher wieder mühevoll gelockert werden müssen, fest eingestellte Abstandshalter 31,..,33. Obgleich die Abstandshalter 31,..,33 konstruktiv gleich aufgebaut sind, wie die TAVs 28, 29 der Fig. 2, unterscheiden sie sich bezüglich der Anordnung und Funktion deutlich. Die Abstandshalter 31,..,33 bestehen jeweils aus Gewindehülsen 34, die mit dem einen Ende an einem der Tragringe 13, 13' und 13" angeschweisst sind, und aus Schrauben 35, die in das freie Ende der Gewindehülsen 34 eingeschraubt und dann fixiert sind.

Die Abstandshalter 31,..,33 sind jeweils am Rand der horizontalen Erweiterung 22 der Tragringe 13,..,13" in der horizontalen Mittelebene 23 liegend angebracht. Die Schrauben 35 sind alle soweit in die Gewindehülsen 34 eingeschraubt, dass zwischen den Oberseiten der Schraubenköpfe und dem angrenzenden Gehäusespant 30 bzw. 25,..,27 ein Spiel SP von wenigen Millimetern vorhanden ist. Dieses Spiel SP bleibt während und nach dem Transport der Maschine 10 unverändert und ändert sich erst, wenn sich der Statorblechkörper während des Betriebs thermisch ausdehnt.

Da bei der betriebsbedingten thermischen Ausdehnung des Statorblechkörpers 11 die Relativbewegung zwischen dem Statorblechkörper 11 und dem Gehäuseunterteil 15 um so grösser ist, je weiter der Ort am Statorblechkörper 11 von der vertikalen Mittelebene 37 entfernt ist, und in der vertikalen Mittelebene 37 selbst gegen Null geht, ändern sich Ausbildung und Anordnung der Abstandshalter 31,..,33 mit dem Abstand von der vertikalen Mittelebene 37 des Statorblechkörpers 11. Bei den von der vertikalen Mittelebene 37 weiter entfernten Tragringen 13, 13' sind die Abstandshalter 31, 32 jeweils nur einseitig zwischen den Tragring und dem näher zur vertikalen Mittelebene 37 liegenden benachbarten Gehäusespant 30 bzw. 25 angeordnet. Auf der (in Fig. 3 nicht dargestellten) rechten Seite von der vertikalen Mittelebene 37 ist die Anordnung entsprechend spiegelbildlich.

Auf diese Weise lässt sich die transportbedingte Relativbewegung, die für den gesamten Statorblechkörper 11 einheitlich ist, in beiden möglichen axialen Richtungen sicher begrenzen. Bewegt sich der Statorblechkörper 11 in Fig. 3 nach links, begrenzen die aussenliegenden Abstandshalter rechts von der Mittelebene 37 die Bewegung. Bewegt sich der Statorblechkörper 11 dagegen nach rechts, begrenzen die aussenliegenden Abstandshalter 31, 32 links von der Mittelebene 37 die Bewegung. Die betriebsbedingte thermische Relativbewegung, die auf beiden Seiten der Mittelebene 37 in entgegengesetzte Richtungen nach aussen gerichtet ist wird dagegen von den aussenliegenden Abstandshaltern 31, 32 nicht behindert, weil sich deren Spiel vergrössert. Bei den näher an der vertikalen Mittelebene 37 liegenden Tragringen 13", bei denen die thermisch bedingte Relativbewegung eher gering ist, können die Abstandshalter 33 jeweils in entgegengesetzten Richtungen zwischen den Tragring und den beiden benachbarten Gehäusespanten 26, 27 angeordnet sein. Im Betrieb nimmt dann das Spiel SP zwischen Abstandshalter 33 und Gehäusespanten 26, 27 auf der rechten Seite des Tragrings 13" zu, während es auf der linken Seite abnimmt, ohne jedoch auf Null zu gehen.

Insgesamt können so ohne Veränderung an den Abstandshaltem 31,..,33 während des Transportes der Maschine 10 Beschleunigungskräfte bis zu 1 g sicher aufgefangen und abgeleitet werden, währen sich beim späteren Betrieb der gegenüber dem Gehäuse 14 wärmere Statorblechkörper 11 frei ausdehnen kann.

### BEZUGSZEICHENLISTE

- 10: elektrische Maschine (horizontalachsig)
- 11: Statorblechkörper
- 12: Rotor
- 13,13',13": Tragring
- 14: Gehäuse
- 15: Gehäuseunterteil
- 16: Gehäuseoberteil
- 17: Gehäuseabschnitt (vertikal, eben)
- 18: Rohrstück
- 19: Befestigungsplatte
- 20,21: Befestigungsblock
- 22: Erweiterung (horizontal)
- 23: Mittelebene (horizontal)
- 24,..,27,30: Gehäusespant
- 28,29: Transport-Arretierverschraubung
- 31,..,33: Abstandshalter
- 34: Gewindehülse
- 35: Schraube
- 36: Maschinenlängsachse
- 37: Mittelebene (vertikal)
- SP: Spiel

## Patentansprüche

1. Horizontalachsige elektrische Maschine (10), umfassend ein mit Gehäusespanten (24,..,27, 30) versteiftes, in eine Gehäuseunterteil (15) und ein abnehmbares Gehäuseoberteil (16) unterteiltes Gehäuse (14, 15, 16), sowie einen Statorblechkörper (11), welcher in senkrecht zur Maschinenlängsachse (36) angeordneten, gegenseitig beabstandeten Tragringen (13, 13', 13") verspannt ist, welche Tragringe (13, 13', 13") an mehreren Stellen ihres Aussenumfangs über Befestigungsteile (18, 19, 20, 21) mit dem Gehäuseunterteil (15) federnd verbunden sind, dadurch gekennzeichnet, dass zwischen dem Statorblechkörper (11) bzw. den Tragringen (13, 13', 13") und Gehäuseunterteil (15) fest eingestellte Sicherungsmittel (31,..,35) angeordnet sind, welche beim Transport der Maschine (10) die axiale Relativbewegung zwischen dem Statorblechkörper (11) bzw. den Tragringen (13, 13', 13") und Gehäuseunterteil (15) begrenzen, und während des Betriebs eine freie Ausdehnung des wärmeren Statorblechkörpers (11) gegenüber dem kälteren Gehäuse (14, 15, 16) gewährleisten.

2. Maschine nach Anspruch 1, dadurch gekennzeichnet, dass die Gehäusespanten (24,..,27, 30) parallel zu den Tragringen (13, 13', 13") verlaufen, und dass die Sicherungsmittel (31,..,35) jeweils zwischen einem Tragring (13, 13', 13") und einem benachbarten Gehäusespant (24,..,27, 30) angeordnet sind.

3. Maschine nach Anspruch 2, dadurch gekennzeichnet, dass die Sicherungsmittel als Abstandshalter (31,..,35) ausgebildet sind, welche sich zwischen dem jeweiligen Tragring und dem benachbarten Gehäusespant erstrecken, und welche mit dem einen Ende fest mit dem Tragring oder dem benachbarten Gehäusespant verbunden sind, und zwischen dem anderen Ende und dem benachbarten Gehäusespant bzw. dem Tragring ein Spiel (SP) aufweisen.

4. Maschine nach Anspruch 3, dadurch gekennzeichnet, dass die Abstandshalter (31,..,35) in ihrer Länge einstellbar ausgebildet sind.

5. Maschine nach Anspruch 4, dadurch gekennzeichnet, dass die Abstandshalter (31,..,33) jeweils eine Gewindehülse (34) und eine in die Gewindehülse (34) eingedrehte Schraube (35) umfassen.

6. Maschine nach einem der Ansprüche 3 bis 5, dadurch gekennzeichnet, dass sich der Statorblechkörper (11) auf beiden Seiten einer senkrecht zur Maschinenlängsachse (36) orientierten vertikalen Mittelebene (37) erstreckt, und dass bei den von der vertikalen Mittelebene (37) weiter entfernten Tragringen (13, 13') die Abstandshalter (31, 32) jeweils nur zwischen den Tragring und dem näher zur vertikalen Mittelebene (37) liegenden benachbarten Gehäusespant (30 bzw. 25) angeordnet sind.

7. Maschine nach Anspruch 6, dadurch gekennzeichnet, dass bei den näher an der vertikalen Mittelebene (37) liegenden Tragringen (13") die Abstandshalter (33) jeweils zwischen den Tragring und den beiden benachbarten Gehäusespanten (26, 27) angeordnet sind.

8. Maschine nach einem der Ansprüche 1 bis 7, dadurch gekennzeichnet, dass die Befestigungsteile als Blattfedern wirkende, vertikal angeordnete, längliche Befestigungsplatten (19) umfassen, welche jeweils im mittleren Bereich mit dem Gehäuseunterteil (15) und an den Enden mit den Tragringen (13, 13', 13") fest verbunden, insbesondere verschweisst sind.
